# EUROPEAN PATENT APPLICATION

(11) **EP 1 158 646 A2**
(43) Date of publication of application: **28.11.2001**
(21) Application number: 01111998.9
(22) Date of filing: 22.05.2001
(51) Int. Cl.: H02J 7/00

(54) **Voltage adjustment device particularly for recharging service batteries**

(30) Priority: 24.05.2000 IT BO000315
(71) Applicant: Norscia, Fernando, 65016 Montesilvano, (Prov. of Pesaro) (IT)
(72) Inventor: Norscia, Fernando, 65016 Montesilvano, (Prov. of Pesaro) (IT)
(74) Representative: Modiano, Guido, Dr.-Ing.

(57) **Abstract**

A voltage adjustment device, particularly for recharging service batteries, characterized in that it is constituted by a battery power supply circuit, comprising switching means, which are connected by way of a first terminal to first filtering means which receive in input a voltage signal and a current signal, and voltage calibration means, which are connected in input to a second terminal of the switching means and in output to the battery, the calibration means being adapted to provide a threshold voltage suitable for recharging the batteries; and by a control circuit comprising a comparator which receives in input a first signal, responsive to a reference voltage, and a second signal, responsive to the threshold voltage, the comparator being adapted to compare the first and second signals and to send an enabling error signal to means for setting the on/off switching threshold of the switching means in order to allow the calibration means to ensure that the threshold voltage is substantially constant.

## Description

The present invention relates to a voltage adjustment device particularly for recharging service batteries subjected to more or less demanding dispensing of power according to the use for which they are designed.

It is known that a problem that is currently felt is recharging one or more service batteries of any motorized vehicle which has its own generator (for example a dynamo or an alternator). All vehicles (campers, trucks, caravans, watercraft, etcetera), when one or more service batteries are installed in order to supply power to the loads of the various services, in fact have the problem of recharging, since after their discharge cycle they are unable to recharge fully in a reasonable amount of time by means of the generator. The voltage measured across the generator reaches a value which meets the electrical load of the vehicle and the maintenance charge of the battery of the vehicle, but is lower than a threshold voltage required to charge the installed service battery completely and in a short time.

Currently, the above noted problem is dealt with by using photovoltaic cells, which however have great technical limitations and very high costs.

Another solution entails installing a second generator which is dedicated exclusively to supplying a threshold voltage capable of ensuring full recharging of the service battery in a short time. However, it is clearly evident that such a solution consists of an additional system which is complicated owing to requirements in terms of space and anchoring in the engine compartment.

The aim of the present invention is to obviate the above mentioned drawbacks of known devices by providing a device which can ensure a stable voltage in input to the terminals of the service battery.

Within this aim, an object of the present invention is to ensure automatically the recharging of any service battery for any voltage level.

Another object of the present invention is to ensure full insulation between the vehicle slave battery and the service battery.

Another object of the present invention is to allow full monitoring of the recharging state of said service battery.

Finally, another object of the present invention is to provide a structure which is simple, relatively easy to provide in practice, safe in use, effective in operation, and relatively low in cost.

This aim and these and other objects which will become better apparent hereinafter are achieved by the present voltage adjustment device, particularly for recharging service batteries, characterized in that it is constituted by a battery power supply circuit, comprising switching means, which are connected by way of a first terminal to first filtering means which receive in input a voltage signal and a current signal, and voltage calibration means, which are connected in input to a second terminal of said switching means and in output to said battery, said calibration means being adapted to provide a reference voltage for recharging said batteries; and by a control circuit comprising a comparator which receives in input a first signal, responsive to a reference voltage, and a second signal, responsive to said threshold voltage, said comparator being adapted to compare said first and second signals and to send an enabling error signal to means for setting the on/off switching threshold of said switching means in order to allow said calibration means to ensure that said threshold voltage is substantially constant.

Further features will become better apparent from the detailed description of a preferred but not exclusive embodiment of an adjustment device particularly for recharging service batteries, according to the invention, illustrated only by way of non-limitative example in the accompanying drawings, wherein:

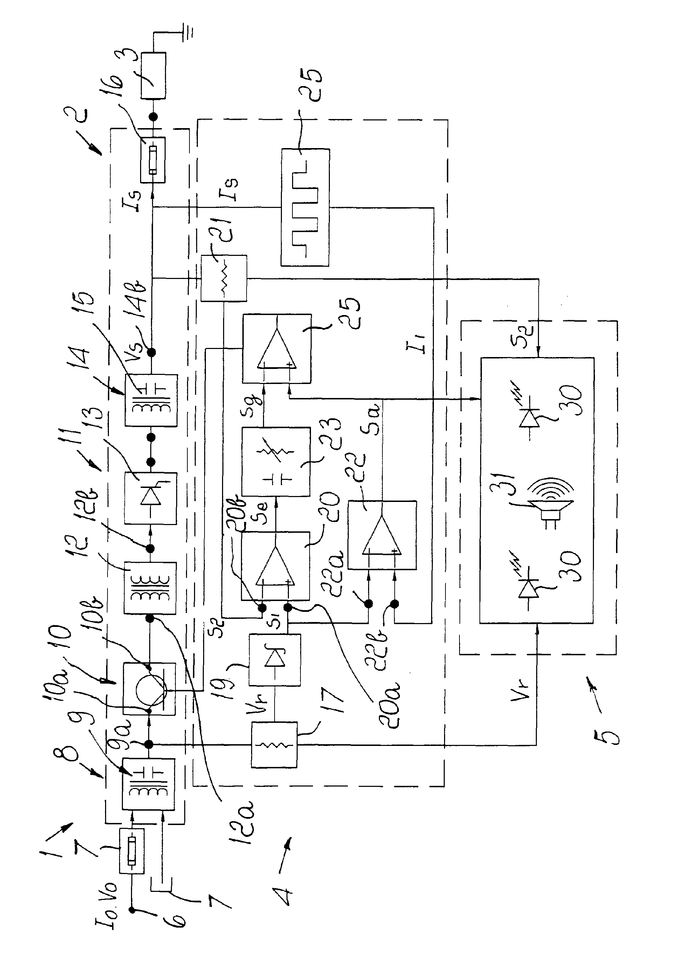

Figure 1 is a single-line electrical block diagram of said device according to the invention.

With reference to the figure, the numeral 1 generally designated an electrical block diagram of a voltage adjustment device, particularly for recharging service batteries, according to the invention.

The diagram 1 is constituted by a circuit 2 for supplying the power of the battery 3, by a control circuit 4 and by a monitoring circuit 5, both being in parallel to the circuit 2.

The circuit 2 comprises, starting from an input 6, which receives a voltage signal V₀ and a current signal I₀, a fuse 7 and first filtering means 8 which are preferably constituted by an inductive-capacitive filter 9. On the output 9a of the inductive-capacitive filter 9 switching means are provided being preferably constituted by transistors 10. The transistors 10 are connected, by means of a first terminal 10a, to the output 9a of the inductive-capacitive filter 9 and, by means of a second terminal 10b, to the calibration means 11, which supply on the output terminal 14b a threshold voltage Vₛ and a threshold current Iₛ for the power supply of the battery 3.

The calibration means 11 comprise a voltage transformer 12 which is connected, by means of its input terminal 12a, to the second terminal 10b and, by means of its output terminal 12b, to the rectifier means 13, being connected in output to the input terminal 14a of the second filtering means 14, being preferably constituted by another inductive-capacitive filter 15. Between the output terminal 14b and the battery 3 there is a fuse 16 in order to prevent irreversible damage to the battery 3 caused by overcurrents.

The circuit 2 receives, through the input 6, the voltage signal V₀ and the current signal I₀ that arrive from a source located ahead of the input 6. Said voltage and current signals, respectively V₀ and I₀, are filtered by the inductive-capacitive filter 9 and cleaned of any noise superimposed on the signals V₀ and I₀. The current and the voltage, cleaned of their noise, are made available on the first terminal 10a of the transistors 10 which, when enabled, according to criteria specified hereinafter, generate a voltage which is converted by the transformer 12, then rectified by the rectifier means 13 and finally cleaned of any noise present thereon by the inductive-capacitive filter 15, on the output terminal 14 of which a constant threshold voltage Vₛ equal to a value adapted to charge the service battery efficiently is made available.

An initialization button 7 is provided in parallel to the input 6 and sends a signal S; which is suitable to enable the control circuit 4 that is adapted to adjust the threshold voltage Vₛ of the circuit 2.

The control circuit 4 comprises a voltage divider 17 connected in series to stabilization means 19, which receive in input a reference voltage Vᵣ representative of the portion of the output voltage of the inductive-capacitive filter 9 and provide in output a first signal S₁ responsive to the reference voltage Vᵣ and provided in input to a gate 20a of a comparator 20 and to a gate 22a of a limiter 22.

The comparator 20, preferably constituted by an operational amplifier, receives on the other gate 20b a second signal S₂ which is responsive to the threshold voltage Vₛ and is drawn by means of a second voltage divider 21 arranged on the output terminal 14b.

The comparator 20, at a certain time of a period T_{c} of data acquisition and processing, processes the first signal S₁ and the second signal S₂ and supplies in output an error signal Sₑ which is representative of the error affecting the threshold voltage Vₛ with respect to the constant voltage value to be maintained on the battery 3.

The error signal Sₑ is sent to means 23 for setting the on/off switching threshold of the transistors 10. The setting means 23 consist of a square-wave pulse modulator, which sends a control signal S_{q} having a frequency *f*_{c} which is inversely proportional to the period T_{c} and whose useful cycle is proportional to the error signal Sₑ. This control signal S_{q} is sent to a gate 25a of an amplifier 25, which amplifies it in terms of amplitude within a limit band which can be activated by an attenuation signal Sₐ in input on the other gate 25b. Advantageously, said limit band can be preset as appropriate adjustment parameters provided on the amplifier 25 vary.

The limiter 22 receives, on the other gate 22b, a first current signal I₁ which is responsive to the threshold current Iₛ and is drawn by means of a shunt resistor 25 arranged on the output terminal 14b. The limiter 22 processes the first current signal I₁ and the first signal S₁ and sends the attenuation signal Sₐ to the amplifier 25. When the attenuation signal Sₐ exceeds an alarm value which is preset in the amplifier 25, it forces the control signal S_{q} to remain within the predefined limit band. The alarm value is set according to overcurrents and overvoltages which are deemed dangerous for the battery 3 and occur on the output terminal 14b.

The control signal S_{q} enables the on/off switching of the transistors 10, which generate a certain voltage and current which, converted, rectified and filtered in the manner described above, determine a voltage value Vₛ which eliminates at Tc the error detected by the comparison between the signal S₁ and the second signal S₂.

The monitoring circuit 5 receives in input the reference voltage Vᵣ, the attenuation signal Sₐ and the second signal S₂ by way of which it activates LEDs 30 for detecting the operating state of the device. There is also a buzzer 31 which is activated when the attenuation signal Sₐ exceeds the threshold value.

It has thus been observed that the invention achieves the intended aim and objects, and in particular the fact is stressed that the voltage on the load is always constant.

An extremely important aspect is the fact that the level of the threshold voltage can be changed according to the load to be supplied simply by acting on the first voltage divider.

The invention thus conceived is susceptible of numerous modifications and variations, all of which are within the scope of the appended claims.

All the details may further be replaced with other technically equivalent elements.

In practice, the materials used, as well as the shapes and the dimensions, may be any according to requirements without thereby abandoning the scope of the protection of the appended claims.

The disclosures in Italian Patent Application no. BO2000A000315, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A voltage adjustment device, particularly for recharging service batteries, **characterized in that** it is constituted by a battery power supply circuit, comprising switching means, which are connected by way of a first terminal to first filtering means which receive in input a voltage signal and a current signal, and voltage calibration means, which are connected in input to a second terminal of said switching means and in output to said battery, said calibration means being adapted to provide a threshold voltage for recharging said batteries; and by a control circuit comprising a comparator which receives in input a first signal, responsive to a reference voltage, and a second signal, responsive to said threshold voltage, said comparator being adapted to compare said first and second signals and to send an enabling error signal to means for setting the on/off switching threshold of said switching means in order to allow said calibration means to ensure that said threshold voltage is substantially constant.

2. The device according to claim 1, **characterized in that** said first terminal is connected to the output of said first filtering means.

3. The device according to claim 1, **characterized in that** it comprises a first voltage divider which is connected to the output of said first filtering means and is suitable to set a modifiable predefined value of said reference voltage.

4. The device according to one or more of the preceding claims, **characterized in that** it comprises stabilization means connected in series to said first divider and suitable to provide said first substantially stabilized signal.

5. The device according to claim 1, **characterized in that** said second signal can be drawn by means of a second divider arranged as a shunt on the output of said calibration means.

6. The device according to one or more of the preceding claims, **characterized in that** said setting means consist of an adjustable-frequency square-wave pulse modulator connected to the output of said comparator and suitable to send a control signal for the on/off switching of said switching means.

7. The device according to one or more of the preceding claims, **characterized in that** said control signal has a useful cycle which is proportional to said error signal.

8. The device according to one or more of the preceding claims, **characterized in that** it comprises an amplifier of said control signal which is connected to a third terminal of said switching means.

9. The device according to one or more of the preceding claims, **characterized in that** said calibration means comprise a voltage transformer which is serially connected to rectifier means and to second filtering means, at the output whereof said threshold voltage is available.

10. The device according to one or more of the preceding claims, **characterized in that** it comprises a shunt resistor on the output of said second filtering means, said shunt resistor being suitable to detect a first current signal which is responsive to the threshold current in input to said battery.

11. The device according to one or more of the preceding claims, **characterized in that** it comprises a current limiter connected to said shunt resistor and suitable to send an attenuation signal to said amplifier in order to limit the amplitude of said square wave within a limit band when said amplitude exceeds a limit value.

12. The device according to one or more of the preceding claims, **characterized in that** it comprises a second voltage divider arranged between the output of said second filtering means and the input of said comparator, said second divider being suitable to detect said second signal and send it to said comparator.

13. The device according to claim 1, **characterized in that** said switching means consist of transistors.

14. The device according to one or more of the preceding claims, **characterized in that** it comprises monitoring means which receive in input said reference voltage, said first attenuation signal and said second signal which is responsive to said reference voltage.

15. The device according to one or more of the preceding claims, **characterized in that** said monitoring means comprise a buzzer and LED for luminous indication.

16. The device according to claim 1, **characterized in that** said control circuit is enabled by an initialization button.
